# EUROPEAN PATENT APPLICATION

(11) **EP 2 133 560 A1**
(43) Date of publication of application: **16.12.2009**
(21) Application number: 08158057.3
(22) Date of filing: 11.06.2008
(51) Int. Cl.: F03D 7/02, F03D 9/02

(54) **Wind turbine and power supply system**

(71) Applicant: Flexenclosure AB, 531 30 Lidköping (SE)
(72) Inventor: Kalén, Hans, 614 90, Söderköping (SE); Karlsson, Mattias, 531 30, Lidköping (SE)
(74) Representative: Fritsche, Daniel

(57) **Abstract**

A horizontal axis wind turbine (10) for generating electrical energy for supply to an energy storage device (43) having a limited energy storage capability. The wind turbine (10) comprises: a rotor (12) having a plurality of blades (11 a-c) mechanically connected thereto for converting kinetic wind energy to rotation of the rotor (12) at a rotational speed; a generator (17) comprising a stationary portion (18) and a rotatable portion (16) connected to the rotor (12) for interacting with the stationary portion (18) to convert the rotation of the rotor (12) into electrical energy for supply to the energy storage device (43); a sensor (46) for sensing the rotational speed of the rotor (12) and for outputting a signal indicative thereof and a braking system (47) controllable to mechanically interact with the rotor (12) to reduce the rotational speed of the rotor (12). The wind turbine further comprises processing circuitry (45) operatively connected to the sensor (46) and to the braking system (47) for evaluating the signal output by the sensor (46) and, if the rotational speed is above a predetermined threshold value, controlling the braking system (47) to reduce the rotational speed through mechanical interaction with the rotor (12).

## Description

### Technical Field of the Invention

The present invention relates to a horizontal axis wind turbine for generating electrical energy for supply to an energy storage device having a limited energy storage capability, to a power supply system comprising such a wind turbine, and to a method for controlling such a power supply system.

### Technical Background

In view of increased environmental awareness, the amount of electrical power generated using wind turbines is increasing. The major part of generated wind power originates from relatively large wind turbines that have been specifically developed to supply an existing power grid.

However, wind power is also increasingly being used for off-line applications, in which wind turbines are used to supply stand-alone equipment with electrical power without having the possibility of supplying any excess power to a power grid.

Such off-line applications impose specific requirements on wind turbines. For example, the wind turbine should be configured to start rotating at a wind speed which is very low compared to wind turbines for "on-line" applications for supplying an existing power grid.

Furthermore, in order to handle the inherently varying supply of wind power, practically every off-line application includes an energy storage device, which may, for example, comprise batteries. Such an energy storage device may generally not be "overcharged".

Therefore, a wind turbine for use in an off-line application typically needs a system for handling excess wind power conditions so as not to damage the energy storage device.

US 6 703 718 discloses a wind turbine for use in off-line applications, in which the output power is controlled (reduced) by shorting windings in the alternator in response to the charge level of a battery powered by the wind turbine and the rotational speed of the wind turbine.

A drawback of the output power control disclosed in US 6 703 718 is that the intermittent shorting of windings in the alternator results in an irregular supply of power from the wind turbine. Furthermore, the shorting of the windings leads to an increased current, resulting in an increased temperature of the alternator, which may detrimentally affect the reliability of the wind turbine.

Additionally, the output power control disclosed in US 6 703 718 may be useful for wind turbines having a relatively low maximum output power, but would appear not to be well suited for wind turbines with a higher power rating due to the amount of heat to be dissipated.

### Summary of the Invention

In view of the above-mentioned and other drawbacks of the prior art, a general object of the present invention is to provide an improved wind turbine, and in particular a wind turbine better suited for off-line applications requiring a relatively high power.

According to a first aspect of the present invention, these and other objects are achieved through a horizontal axis wind turbine for generating electrical energy for supply to an energy storage device having a limited energy storage capability, the wind turbine comprising: a rotor having a plurality of blades mechanically connected thereto for converting kinetic wind energy to rotation of the rotor at a rotational speed; a generator comprising a stationary portion and a rotatable portion connected to the rotor for interacting with the stationary portion to convert the rotation of the rotor into electrical energy for supply to the energy storage device; a sensor for sensing the rotational speed of the rotor and for outputting a signal indicative thereof; a braking system controllable to mechanically interact with the rotor to reduce the rotational speed of the rotor; and processing circuitry operatively connected to the sensor and to the braking system for evaluating the signal output by the sensor and, if the rotational speed is above a predetermined threshold value, controlling the braking system to reduce the rotational speed through mechanical interaction with the rotor.

The energy storage device may be any device capable of storing electrical energy, such as one or several batteries of various kinds (Pb-batteries, Li-ion batteries etc) or capacitor(s).

As was already briefly discussed above in the background section, special requirements are imposed on wind turbines for use in off-line applications including an energy storage device having a limited energy storage capability. This is even more so for off-line applications requiring a relatively high power, which, for the sake of the environment, should be supplied by the wind turbine to the greatest extent possible. An example of such an off-line application is the powering of telecommunication equipment in a base station in a wireless communication network, where the base station may be located in a remote and/or inaccessible location and/or the existing power grid is unreliable.

In such a relatively high power off-line application in which high reliability of service is required, the wind turbine should have a relatively high maximum power, have a very high duty cycle, and should have a controllable output power in order to prevent damage to other components comprised in the total power supply system, such a rectifier, batteries etc.

The present invention is based on the realization that a wind turbine fulfilling the above-mentioned requirements also requires very efficient and reliable control of the output power of the wind turbine, and that this can be achieved using a mechanical braking system responsive to a control unit comprised in the wind turbine.

In this way, very fast and reliable reduction in the electrical power output by the wind turbine can be achieved without any irregularity in the supplied power.

Furthermore, the heat generated when reducing the rotational speed of the rotor can be dissipated in structures considerably more suited for the task than the generator. Hereby, the reliability of the wind turbine can be increased, and the amount of heat that can be dissipated can be increased.

Accordingly, the wind turbine according to the present invention can be dimensioned for a higher maximum power rating than prior art wind turbines for off-line applications using shorting of windings in the generator for output power control.

It should be noted that the rotational speed of the rotor is reduced to a non-zero rotational speed, which is typically at or slightly below the threshold value for the rotational speed, whereby the generation of electrical energy can proceed efficiently even in case of strong winds.

The processing circuitry comprised in the wind turbine may, furthermore, be configured to output a signal for controlling a rotation of the wind turbine in relation to a support structure when the wind turbine is attached thereto, to thereby enable control of the supply of electrical energy from the wind turbine. By rotating the wind turbine in relation to the support structure to which it is attached, the angle between a plane defined by the blades comprised in the wind turbine and the wind direction can be changed, whereby the supply of electrical power can be controlled.

As will be described further below, this rotation of the wind turbine in relation to the support structure to which it is attached can be controlled by an external controller comprised in a power supply system further comprising the wind turbine. For safety and/or reliability reasons, it may, however, be advantageous to handle the control of the rotation of the wind turbine locally, in the processing circuitry comprised in the wind turbine. In this way, changes can be effected quickly and, if necessary, independently of the data communication between an external controller and the wind turbine. Hereby, it can be ensured that the supply of electrical energy from the wind turbine can be sustainably controlled to a safe level even in the event of irregularities, such as failure or latency in the external controller or failure or interference in the communication between the external controller and the wind turbine.

To further improve the reliability of the wind turbine, the wind turbine may additionally comprise an auxiliary power supply, such as a battery and/or a solar cell to ensure uninterrupted supply of power to equipment such as the processing circuitry comprised in the wind turbine.

Advantageously, the wind turbine may be configured to start generating electrical energy at a start-up wind speed of below 3 m/s. Hereby, a high duty cycle of the wind turbine can be achieved, which results in a high average power output, which is an important factor for off-line applications. The person skilled in the art realizes that there are numerous ways in which the wind turbine can be configured to achieve such a low start-up wind speed.

According to various embodiments of the present invention, for example, the following features may, independently or in combination, be implemented in order to achieve the desired low start-up wind speed:
- Light-weight blades;
- Optimized blade design;
- Direct drive of the generator; and
- Low inertia for all moving parts of the wind turbine.

The blades may have an airfoil (wing profile) which has a ratio between the height and the width thereof that is smaller than 15%. Through the provision of such thin blades, the mass of the blades can be reduced as compared to conventional blade designs.

The blades may be hollow, which further reduces the mass of the blades.

One way of achieving a hollow blade having the above-described thin airfoil is to manufacture the blade using carbon fibre technology. Hereby, an exemplary blade can weigh around 15 kg as compared to about 50 to 80 kg for a conventional blade of the same length.

A wind turbine having lighter blades will, with all other factors being constant, start to rotate at a lower wind speed.

Furthermore, by "twisting" each blade in such a way that an angle between the airfoil adjacent to a hub of the wind turbine and the airfoil at a free end of the blade is at least 30°, the portion of each blade closest to the hub can be used to capture wind rather than functioning as a practically inactive portion of the blade as is typically the case for conventional wind turbines.Another desired feature for a wind turbine for off-line applications is a near optimum efficiency for all wind speeds up to a maximum wind speed resulting in a predetermined maximum output power. According to one embodiment of the present invention, this may be achieved by providing each blade with a substantially constant airfoil along at least 70 percent of a total length thereof.

Such a configuration has proven to be particularly advantageous in combination with the above-mentioned twisting of the blades. Hereby, an optimum so-called angle of attack (also referred to as angle of incidence) can be achieved across the length of the blade, resulting in a high efficiency for different wind speeds.

To further improve the efficiency of the wind turbine, at least one of the rotatable portion and the stationary portion of the generator may comprise a plurality of permanent magnets.

Furthermore, the rotatable portion of the generator may be attached to the rotor to prevent transmission losses resulting from the provision of a gear box or similar, which is often used in conventional wind turbines.

Moreover, the braking system comprised in the wind turbine may advantageously be a hydraulic braking system comprising a disc attached to the rotor and at least one caliper attached to a stationary structure comprised in the wind turbine.

Through the provision of such a braking system, very fast and efficient braking can be achieved in a precisely controlled manner, while enabling excellent heat dissipation. To even further increase the heat dissipation capability, the disc may be ventilated.

To enable the handling of unexpected situations, such as power failure of the control system, loss of function of the "normal" braking system, loss of communication with any external control system etc., the wind turbine according to the present invention may advantageously be provided with a separate emergency brake system, which may be spring-loaded to ensure fail-safe operation thereof.

For example, the emergency brake system may be implemented using a caliper arranged to interact with a disc attached to the rotor.

Moreover, the wind turbine according to the present invention may advantageously be comprised in a power supply system for supplying electrical power to an energy storage device having a limited energy storage capability, further comprising a controller connected to the wind turbine and to the energy storage device for controlling operation of the power supply system, wherein the wind turbine is attached to a support structure and connectable to the energy storage device for supplying electrical energy thereto.

The wind turbine may be rotatably connected to the support structure, and the power supply system may further comprise a controllable drive unit for enabling controlled rotation of the wind turbine in relation to the support structure.

Moreover, the controller may be configured to control the drive unit to change an angle between a plane defined by the blades comprised in the wind turbine and a wind direction in response to a state of the power supply system. By changing the angle between the plane of the blades and the wind direction, the electrical power output from the wind turbine can be controlled. The maximum power is output when the normal of the plane of the blades coincides with the wind direction, and any other angle results in a reduced output power.

This control of the angle between the blades and the wind direction may take place through direct control of the drive unit, or, more preferably, via the processing circuitry comprised in the wind turbine.

According to a second aspect of the present invention, the above-mentioned and other objects are achieved through a method for controlling a power supply system for supplying electrical power to an energy storage device having a limited energy storage capability, comprising a wind turbine according to any one of the preceding claims mounted on a support structure and connectable to the energy storage device for supplying electrical energy thereto, the method comprising the steps of: acquiring data indicative of a state of the power supply system; and controlling an angle between a plane defined by the blades comprised in the wind turbine and a wind direction, to thereby control the supply of electrical energy from the wind turbine based on the acquired data

It should be noted that the method according to the present invention by no means is limited to performing the steps thereof in any particular order.

The data indicative of the state of the power supply system may advantageously include energy storage data indicative of a current energy storage level of the energy storage device.

Moreover, the method according to the present invention may further comprise the step of reducing the rotational speed of the rotor of the wind turbine through mechanical interaction with the rotor.

Hereby, it is ensured that a fast reduction in output power from the wind turbine is achieved, for example using a hydraulic brake system, while the wind turbine is rotated in relation to the wind direction to the desired angle between the plane of the blades and the wind. When the desired angle has been reached, the mechanical brake can be released, and the wind turbine can operate freely to supply a desired reduced output power.

Other variations of and effects obtained through the present second embodiment are largely analogous to those described above in connection with the first embodiment of the present invention.

Additionally, the above-mentioned and other objects are achieved through a computer program configured to execute the steps of the method according to the invention when run on a controller comprised in the power supply system according to the invention.

### Brief Description of the Drawings

These and other aspects of the present invention will now be described in more detail, with reference to the appended drawings showing a currently preferred embodiment of the invention, wherein:
Figs 1a-b schematically illustrate an exemplary shelter for a base station in a wireless communication network;
Fig 2 schematically illustrates an exemplary windturbine according to an embodiment of the present invention;
Figs 3a-c schematically illustrate an exemplary blade configuration for the wind turbine in fig 2;
Fig 4 is a diagram schematically illustrating an exemplary performance of the wind turbine in fig 2;
Fig 5 is a block diagram schematically illustrating a power supply system comprising a wind turbine according to an embodiment of the present invention;
Figs 6a-e are diagrams schematically illustrating control of the wind turbine in the power supply system in fig 5 in an exemplary scenario; and
Fig 7 is a flow chart schematically illustrating a preferred embodiment of the method according to the invention.

### Detailed Description of a Preferred Embodiment of the Invention

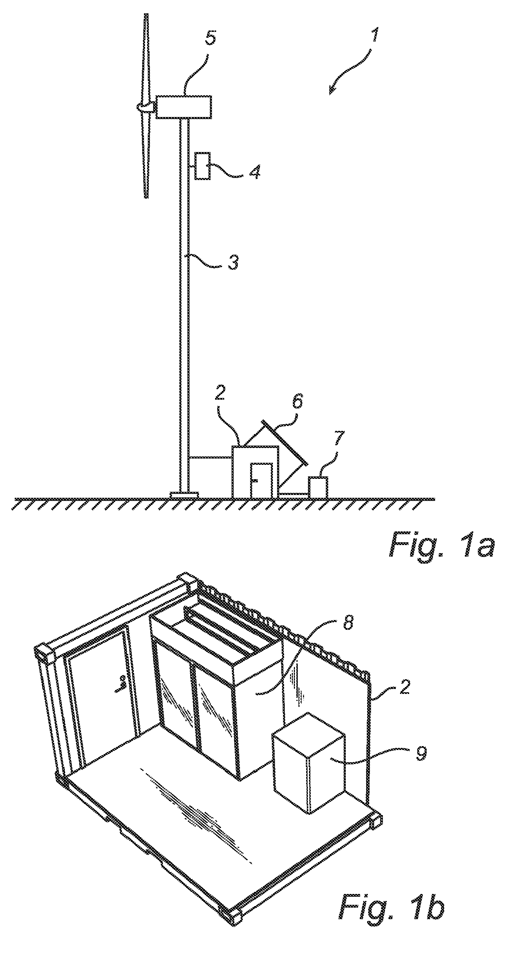

Figs 1a-b schematically illustrate a shelter for a base station as an exemplary application for the wind turbine and power supply system according to embodiments of the present invention.

The term "shelter" is here used to denote not only the enclosure actually sheltering the telecommunication equipment of the base station, but also the power supply system supplying power to the base station.

With reference to fig 1a, showing an outside overview thereof, the shelter 1 includes an enclosure 2 housing telecommunication equipment (not shown in fig 1), a mast 3 supporting transmission equipment such as one or several antennas 4 for radio communication and a wind turbine 5. As is schematically shown in fig 1a, the shelter further includes an additional climate-dependent power source in the form of a solar panel 6 which is supported by the enclosure 2, and an auxiliary power source, here indicated as a diesel/biofuel generator 7.

As is schematically illustrated in fig 1b, showing an inside view of the enclosure 2 without any telecommunication equipment installed, the power supply system of the shelter 1 further includes an energy storage device provided in the form of a battery arrangement. This battery arrangement is housed in a heat-insulated cabinet 8. The space in the enclosure, except for the heat-insulated cabinet constitutes a first space for accommodating the telecommunication equipment. The heat-insulated cabinet 8, on the other hand, constitutes a second space that is thermally insulated from the first space.

The shelter is further provided with a climate control system including an air circulation system (not shown in fig 1b) for cooling the telecommunication equipment, and an air conditioning system 9 for cooling the batteries installed inside the heat-insulated cabinet 8. The air circulation system cools the telecommunication equipment by introducing air from the outside into the enclosure. For most installation sites, this air circulation system need not be equipped with active cooling of the air.

The basic concept illustrated in figs 1a-b is especially suitable for use in remote regions where it is not feasible to power the base station from the power grid. The concept may, however, also advantageously be used in more developed parts of the world, with the aim of reducing emission of green house gases caused by the power consumption of the base station.

Practically each site of deployment for a power supply system in general, and the base station shelter 1 schematically illustrated in figs 1a-b in particular, has its own unique requirements on the power supply system. Furthermore, each power-consuming device, such as the telecommunication equipment in a base station, imposes specific requirements on the power supply system.

In order to provide a suitable system for each set of conditions or requirements, the basic concept of figs 1a-b should be modified based on such considerations as, for example, the power requirements of the power-consuming device, the accessibility of the site, the climate conditions at the site, the type of auxiliary power that is available, the duty cycle requirements of the power-consuming device, and, finally, various cost issues.

Based on all of these requirements, the power supply system is dimensioned for the particular application. Based on a certain price of photovoltaic solar cells, average wind conditions at the site, local personnel costs, fuel cost etc, a particular mix of energy from the climate-dependent power source(s) and the auxiliary power source(s) is optimal. In various embodiments, this mix may typically be around 80% of the total average power over time from the climate-dependent power source(s) and 20% from the auxiliary power source(s). Of course, the size and other properties of the energy storage device are also parameters in the dimensioning process.

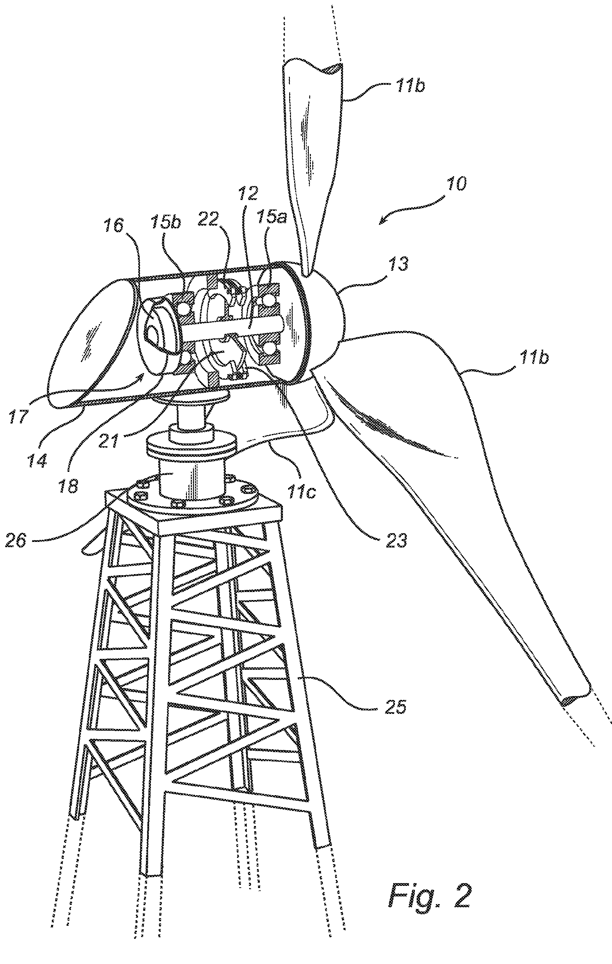

Fig 2 schematically illustrates a wind turbine according to an embodiment of the present invention, which is especially suitable for off-line applications, such as the shelter 1 in figs 1a-b.

With reference to fig 2, the wind turbine 10 in fig 2 is a horizontal axis wind turbine having three blades 11a-c which are attached to a rotor shaft 12 via a hub 13. The rotor shaft 12 is held in place inside a housing 14 by bearings 15a-b. Attached to the rotor shaft 12 is, moreover, the rotatable portion 16 of a generator 17. As can be seen in fig 2, the rotatable portion 16 is directly connected to the rotor shaft 12, rather than via a gear-box as is typically the case for conventional wind turbines.

Furthermore, the generator 17 comprises a stationary portion 18, which includes a relatively large number of permanent magnets. As can be seen in fig 2, the generator 17 is rather narrow and has a relatively large diameter, which enables it to work efficiently at a low rotational speed of the rotatable portion 16.

Due to the special configuration of the blades 11a-c, the omission of a gear box, and the design of the generator 17 to enable efficient generation of electrical energy at a low rotational speed of the rotatable portion 16 (and thus of the rotor shaft 12), the wind turbine 10 starts to generate electrical energy at a very low start-up wind speed, and is efficient at all wind speeds up to the maximum wind speed.

Since the design of the wind turbine 10 enables it to rapidly react even on small changes in wind conditions, an efficient braking system is required. This is especially the case for off-line applications in which there is no power grid to dump excess energy into.

To this end, the wind turbine 10 comprises a mechanical hydraulic braking system including a disc 21 attached to the rotor shaft 12 and a first caliper 22 attached to the housing 14. The first caliper 22 is controllable by an "onboard" control system (not shown in fig 2), based on signals from a sensor (not shown in fig 2) for determining the rotational speed of the rotor shaft 12. In this way, excess supply of electrical energy from the wind turbine 10 can be prevented safely and efficiently.

In addition to the hydraulic braking system, the wind turbine 10 also comprises a spring-loaded emergency brake system, which includes an additional, second caliper 23, which automatically engages with the disc 21 to stop the rotor shaft 12 in the event of a failure condition, such as loss of hydraulic pressure in the hydraulic braking system.

Through the hydraulic braking system, the output power from the wind turbine 10 can quickly and reliably be reduced, without detrimentally influencing the quality of the output power.

In this way, sudden wind gusts can be handled by temporarily reducing the rotational speed of the rotor shaft 12 using the hydraulic braking system. When the wind gust has passed, the first caliper 23 is controlled to release the disc 21, allowing the wind turbine 10 to continuously generate electrical energy with maximum efficiency.

If, however, the output power of the wind turbine 10 needs to be reduced due to phenomena with a longer time constant, such as due to an increased wind level, or the energy storage device supplied by the wind turbine 10 being fully charged, it would not be optimal to continuously operate the hydraulic braking system.

Therefore, the wind turbine 10 in fig 2 is rotatably mounted on a support structure 25, here in the form of a telecommunication mast, and can be rotated in relation to the support structure 25 to change an angle between a plane defined by the blades 11a-c and the current direction of the wind.

To this end, a drive unit 26 is provided on the mast 25. The drive unit 26 can be controlled by a control unit (which may be comprised in the wind turbine 10, or be provided in a power supply system comprising the wind turbine 10) to rotate the wind turbine 10. By changing the angle between the plane defined by the blades 11a-c and the direction of the wind from the optimum angle, the output power can be reduced without the need for continuous mechanical or electrical braking of the rotor shaft 12.

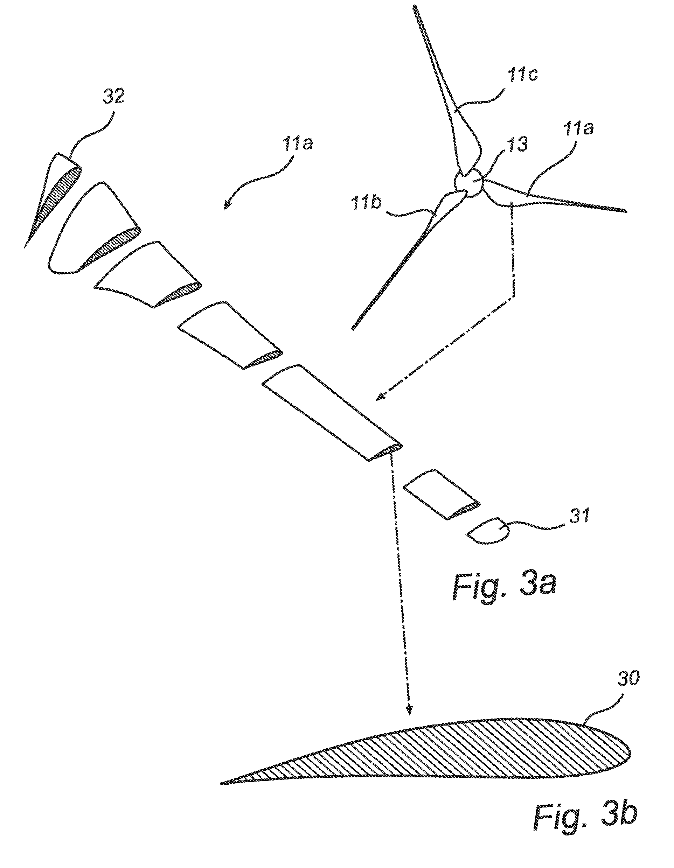

With reference to figs 3a-c, the configuration of the blades 11a-c comprised in the wind turbine 10 in fig 2, will now be described in greater detail.

To achieve an optimum or near optimum performance for the particular type of off-line applications for which the wind turbine 10 in fig 2 is intended, the present inventor has found that the blades 11a-c may advantageously have substantially the same airfoil 30 along almost the entire length of the blade 11a. This selection of airfoil 30 enables the wind turbine 10 to start generating electrical energy at a very low start-up wind speed.

When the wind speed increases, also the rotational speed of the rotor shaft 12 in fig 2 increases. As a result, the speed of the tip 31 of the blade 11a becomes considerably higher than the speed of the base 32 of the blade 11a.

As a consequence, the resulting so-called angle of attack between the blade 11a and the air differs depending on position along the blade 11a, the airfoil 30, the wind speed and the resulting rotational speed of the rotor shaft 12.

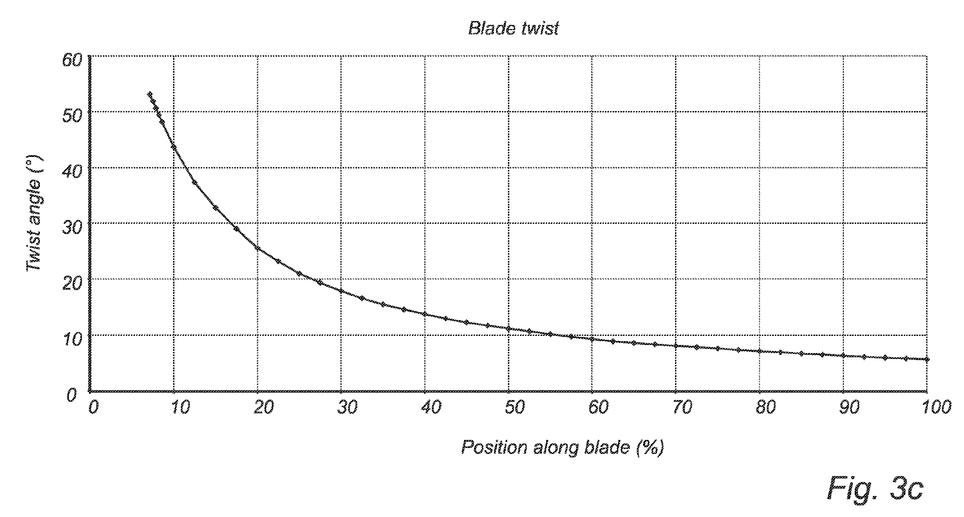

The present inventor has found that a twist of the blade 11a as indicated in fig 3c will provide the optimum distribution of angles of attack along the blade 11a for the characteristics of the wind turbine 10 in fig 2.

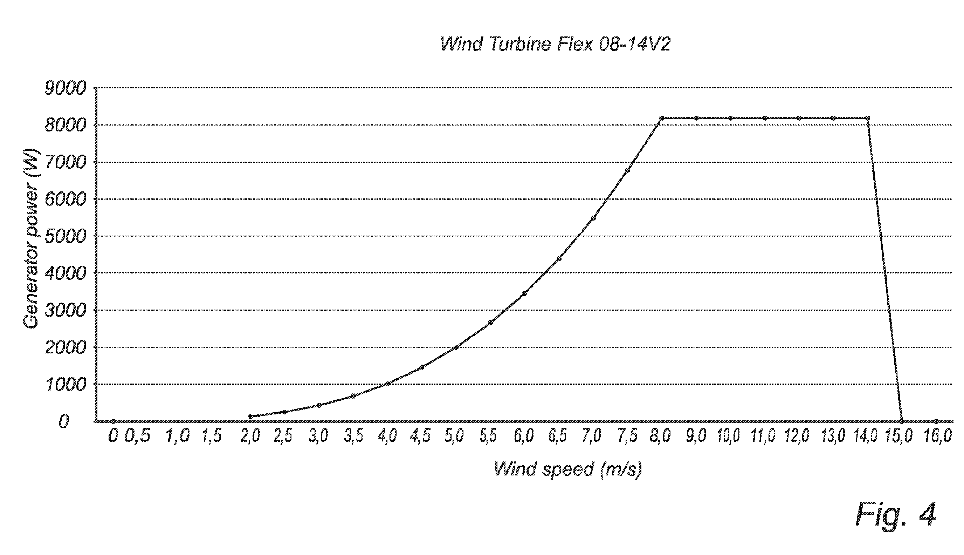

Through the above-described configuration of the wind turbine 10, a very low start-up wind speed of about 2 m/s, in combination with an efficient operation all the way up to about 8 m/s can be obtained, which is illustrated by the diagram in fig 4.

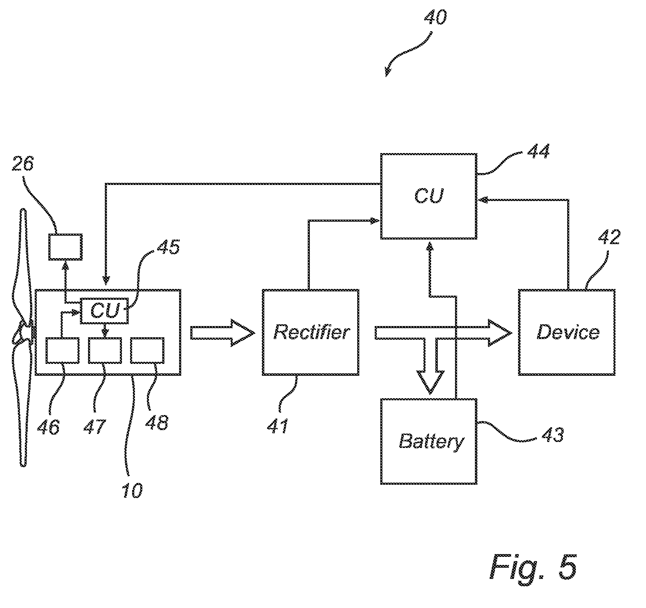

In the following, operation of a power supply system 40 comprising a wind turbine 10 according to an embodiment of the present invention will be described with reference to the schematic block diagram in fig 5.

In fig 5, flow of electrical energy is denoted by block arrows, while control signal paths are indicated by solid arrows.

During operation of the wind turbine 10, AC power generated thereby is fed to a rectifier 41 for converting the AC power to DC power. The DC power is fed to an energy consuming device 42, such as telecommunication equipment in a base station, and to an energy storage device, here in the form of a battery arrangement 43.

To control the operation of the power supply system 40 based on the status of the different devices comprised therein, the power supply system 40 further comprises a controller 44.

As described above in connection with fig 2, the wind turbine 10 further has an onboard control system including a control unit 45, a sensor 46 for sensing the rotational speed of the rotor shaft 12, a hydraulic braking system 47 and an emergency/backup braking system 48.

To maximize the reliability of the power supply system 40, the onboard control unit 45 is configured to activate the hydraulic braking system 47 to reduce the rotational speed of the rotor shaft 12 if the sensor 46 indicates a rotational speed which is higher than a predetermined threshold value. This operation of the onboard control unit 45 takes place independently of the rest of the power supply system 40. Hereby, damage to the wind turbine 10 and other devices in the power supply system, such as the rectifier 41 can be prevented even if errors in the power supply system 40 occur or if there is a communication glitch between the external controller 44 and the control unit 45 in the wind turbine 10.

In cases when the output power from the wind turbine 10 should be reduced to a power below that obtained at the predetermined maximum rotational speed, for example due to the battery arrangement 43 being fully charged, the controller 44 of the power supply system 40 sends a signal to the onboard control unit 45 to reduce the rotational speed of the rotor shaft 12. In response to this signal, the onboard control unit 45 activates the hydraulic braking system 47 until the sensor 46 indicates that the desired rotational speed has been achieved.

Subsequently, or at the same time, the controller 44, via the onboard control unit 45, controls the drive unit 26 to rotate the wind turbine 10 in relation to the direction of the wind by a sufficient angle to achieve the desired output power without activation of the hydraulic braking system 47.

If the controller 44 signals an error state or in case of power failure, loss of communication to the onboard control unit 45, or the like, the emergency braking system 48 is automatically and autonomously activated to immediately stop the rotation of the rotor shaft 12 to prevent further generation of electrical energy by the wind turbine 10.

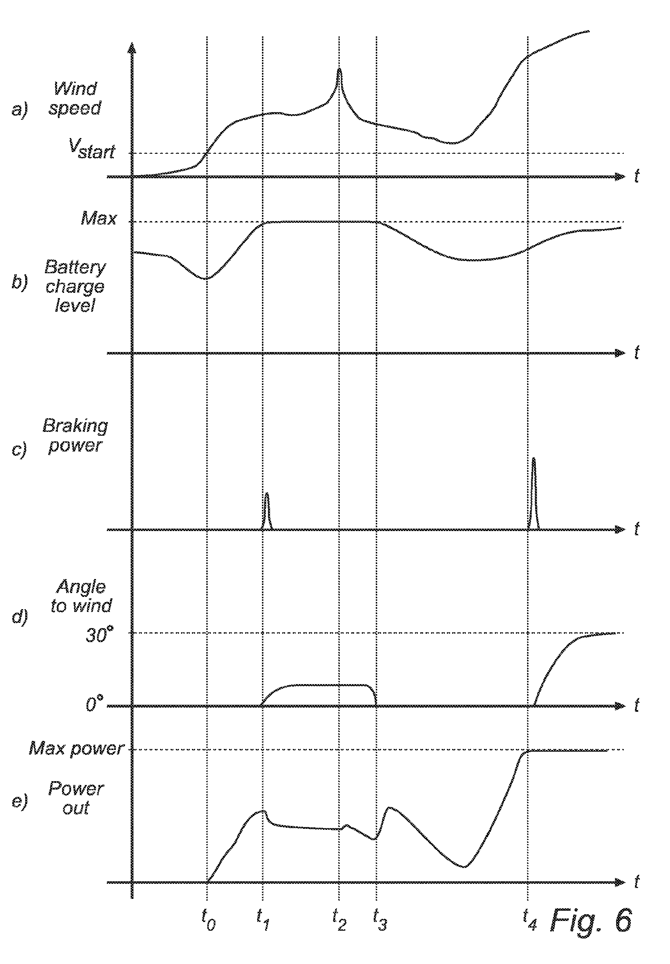

After now having described the basic functional configuration of an exemplary power supply system 40 comprising a wind turbine 10 according to an embodiment of the present invention, control of the wind turbine 10 in an exemplary situation will now be described with reference to the schematic diagrams in figs 6a-e.

The diagram in fig 6a schematically illustrates wind speed as a function of time according to an exemplary scenario. In the diagram, the start-up wind speed vₛₜₐᵣₜ is indicated by a dashed line.

The diagrams in figs 6b and c schematically illustrate the charge level of the battery arrangement 43 and the braking power applied using the hydraulic braking system 47 of the wind turbine 10, respectively. In the diagram in fig 6b, the maximum charge level of the battery arrangement is indicated by a dashed line.

The diagram in fig 6d illustrates the angle of the wind turbine 10 in relation to the wind direction, where 0° denotes the wind direction for maximum output power from the wind turbine 10 and the diagram in fig 6e illustrates the output power from the wind turbine 10 as a function of time.

In the present example illustrated by figs 6a-e, the situation at t = 0 is as follows:

The wind speed is below the start-up wind speed for the wind turbine 10 (fig 3a) and the batteries 43 are not fully charged (fig 3b). As a consequence, the blades 11a-c of the wind turbine 10 are stationary and no power is output by the wind turbine 10.

Subsequently, the wind speed increases, to reach the start-up wind speed vₛₜₐᵣₜ at the time to. Until the time t₀ no power has been generated by the wind turbine 10, and since the energy consuming device 42 has consumed power, the charge level of the batteries 43 has been reduced (fig 3b). At t₀, however, the wind turbine 10 starts to generate electrical energy, as indicated in fig 6e.

At time t₁, the batteries 43 have been charged to their maximum charge level (fig 6b), which is sensed by the external controller 44. The controller 44 sends control signals to the onboard control unit 45, which temporarily activates the hydraulic braking system 47 as indicated in fig 6c, and to the drive unit 26 to rotate the wind turbine 10 in relation to the wind direction. When the wind turbine 10 has been rotated an appropriate angle, as indicated in fig 6d, the hydraulic braking system 47 is controlled to release the rotor shaft 12 (fig 6c).

At the time t₂, there is a sudden gust of wind (fig 6a) which, if no action were taken, would result in too much current reaching the batteries 43, which are still fully charged (fig 6b). To prevent this, the external controller 44 sends a control signal to the onboard control unit 45 to activate the hydraulic braking system 47 (fig 6c). Since the rise in rotational speed/output power results from a gust of wind and not to a steady increase in the wind speed, the angle of the wind turbine 10 to the wind direction is maintained (fig 6d).

Subsequently, at time t₃, the charge level of the batteries 43 is no longer at its maximum level, and more power can be delivered from the wind turbine 10. At the same time, the wind speed decreases (fig 6a). By rotating the wind turbine 10 back to 0°, however, the output power can be increased slightly (fig 6e).

In the present exemplary scenario, the wind speed then varies (fig 6a) and a correspondingly varying output power is obtained from the wind turbine 10 (fig 6e) until the time t₄ when the wind speed has reached such a level that the predetermined maximum rotational speed (and accordingly the maximum output power) has been reached, above which devices, such as the rectifier 41 would be damaged. At the time t₄, therefore, the onboard control unit 45 controls the hydraulic braking system to temporarily reduce the rotational speed of the rotor shaft 12, while the external controller 44 controls the drive unit 26 to rotate the wind turbine 10 to an angle for which the output power is limited to the maximum allowed rating.

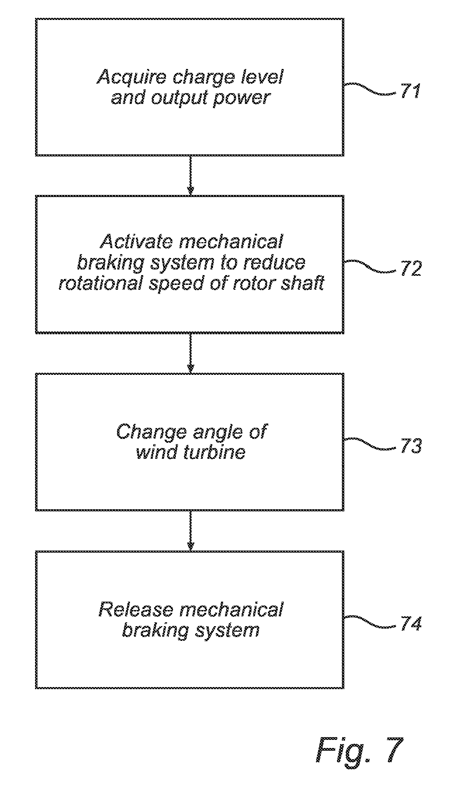

Finally, a preferred embodiment of the method according to the invention for controlling the power supply system 40 in fig 5 will now be described with reference to the flow chart in fig 7.

In a first step 71, the external controller 44 acquires data indicative of the state of the power supply system 40, such as data indicative of the charge level of the battery arrangement 43, data indicative of the power supplied by the wind turbine 10, etc.

Based on this acquired data, the external controller 44 sends, in step 72, a control signal to the onboard control unit 45, instructing the control unit 45 to control the hydraulic braking system 47 to mechanically engage with the rotor shaft 12 to reduce the rotational speed of the rotor shaft 12 until the desired output power has been obtained.

Subsequently, in step 73, the external controller 44 controls the drive unit 26 to change the angle of the wind turbine 10 relative to the direction of the wind to thereby achieve a long-term reduction of the output power.

After having rotated the wind turbine 10 to the desired angle, the hydraulic braking system is controlled to release the rotor shaft 12 in step 74.

The person skilled in the art realizes that the present invention by no means is limited to the preferred embodiments described above. For example, the division of responsibilities between the onboard controller 45 and the external control unit 44 as described herein may be shifted in either direction. For instance, the onboard control unit 45 may control the drive unit 26 to control the rotation of the wind turbine 10.

## Claims

1. A horizontal axis wind turbine (10) for generating electrical energy for supply to an energy storage device (43) having a limited energy storage capability, said wind turbine (10) comprising:
a rotor (12) having a plurality of blades (11a-c) mechanically connected thereto for converting kinetic wind energy to rotation of said rotor (12) at a rotational speed;
a generator (17) comprising a stationary portion (18) and a rotatable portion (16) connected to said rotor (12) for interacting with said stationary portion (18) to convert said rotation of the rotor (12) into electrical energy for supply to said energy storage device (43);
a sensor (46) for sensing said rotational speed of the rotor (12) and for outputting a signal indicative thereof;
a braking system (47) controllable to mechanically interact with said rotor (12) to reduce said rotational speed of the rotor (12); and
processing circuitry (45) operatively connected to said sensor (46) and to said braking system (47) for evaluating said signal output by the sensor (46) and, if said rotational speed is above a predetermined threshold value, controlling said braking system (47) to reduce said rotational speed through mechanical interaction with said rotor (12).

2. The wind turbine (10) according to claim 1, wherein said processing circuitry (45) is configured to output a signal for controlling a rotation of said wind turbine (10) in relation to a support structure (25) when said wind turbine (10) is attached thereto, to thereby enable control of said supply of electrical energy from said wind turbine (10).

3. The wind turbine (10) according to claim 1 or 2, being configured to start generating said electrical energy at a start-up wind speed of below 3 m/s

4. The wind turbine (10) according to any one of the preceding claims, wherein each of said blades (11a-c) exhibits a substantially constant airfoil (30) along at least 70 percent of a total length thereof.

5. The wind turbine (10) according to claim 4, wherein each of said blades (11a-c) is configured in such a way that an angle between said airfoil adjacent to a hub (13) of said wind turbine (10) and said airfoil at a free end (31) of said blade (11a-c) is at least 30°.

6. The wind turbine (10) according to any one of the preceding claims, wherein said rotatable portion (16) of the generator (17) is attached to said rotor (12).

7. The wind turbine (10) according to any one of the preceding claims, wherein said braking system (47) is a hydraulic braking system comprising a disc (21) attached to said rotor (12) and at least one caliper (22) attached to a stationary structure (14) comprised in said wind turbine (10).

8. The wind turbine (10) according to any one of the preceding claims, further comprising spring-loaded emergency brake system (48) configured to automatically mechanically interact with said rotor (12) to stop said rotation thereof in case of an emergency situation.

9. A power supply system (40), for supplying electrical power to an energy storage device (43) having a limited energy storage capability, said power supply system (40) comprising:
a wind turbine (10) according to any one of the preceding claims attached to a support structure (25) and connectable to said energy storage device (43) for supplying electrical energy thereto; and
a controller (44) connected to said wind turbine (10) and said energy storage device (43) for controlling operation of the power supply system (40).

10. The power supply system (40) according to claim 9, wherein said wind turbine (10) is rotatably connected to said support structure (25), and said power supply system (40) further comprises a controllable drive unit (26) for enabling controlled rotation of said wind turbine (10) in relation to said support structure (25).

11. The power supply system (40) according to claim 10, wherein said controller (44) is configured to control said drive unit (26) to change an angle between a plane defined by said blades (11a-c) comprised in the wind turbine (10) and a wind direction in response to a state of said power supply system (40).

12. A method for controlling a power supply system (40) for supplying electrical power to an energy storage device (43) having a limited energy storage capability, comprising a wind turbine (10) according to any one of the preceding claims attached to a support structure (25) and connectable to said energy storage device (43) for supplying electrical energy thereto, said method comprising the steps of:
acquiring (71) data indicative of a state of said power supply system (40); and
controlling (73) an angle between a plane defined by said blades (11a-c) comprised in the wind turbine (10) and a wind direction, to thereby control said supply of electrical energy from said wind turbine (10) based on said acquired data.

13. The method according to claim 12, wherein said data indicative of said state of the power supply system (40) includes energy storage data indicative of a current energy storage level of said energy storage device (43).

14. The method according to claim 12 or 13, further comprising the step of:
reducing (72) said rotational speed of the rotor (12) of the wind turbine (10) through mechanical interaction with said rotor (12).

15. A computer program configured to execute the steps of the method according to any one of claims 12 to 13 when run on a controller (44) comprised in the power supply system (40) according to any one of claims 9 to 11.
